# DEMANDE DE BREVET EUROPEEN

(11) **EP 0 671 701 A1**
(43) Date de publication de la demande: **13.09.1995**
(21) Numéro de dépôt: 95400489.1
(22) Date de dépôt: 07.03.1995
(51) Int. Cl.: G06K 19/06, G06K 7/10

(54) **Carte magnétique et dispositif de lecture de cette carte**

(30) Priorité: 11.03.1994 FR 9402861
(71) Demandeur: THOMSON-CSF, 75008 Paris (FR)
(72) Inventeur: Ganne, Jean-Pierre, F-92402 Courbevoie Cédex (FR); Labeyrie, Michèle, F-92402 Courbevoie Cédex (FR); Dubois, Jean-Claude, F-92402 Courbevoie Cédex (FR)
(74) Mandataire: Guérin, Michel

(57) **Abrégé**

L'invention concerne une carte magnétique, type carte bancaire ou carte d'identité, renfermant des éléments ferrimagnétiques absorbant sélectivement les hyperfréquences.

L'invention concerne également le dispositif de lecture adapté à cette carte, qui comprend un système actif et un système résonant capable de filtrer les ondes hyperfréquences aux fréquences de résonance des ferrimagnétiques de la carte à lire. Le dispositif de lecture, équipé d'un système de mesure de l'amplitude des ondes hyperfréquences peut ainsi reconnaître les informations magnétiques de la carte, par perturbation ou non des ondes hyperfréquences lors de l'introduction de la carte dans ledit dispositif.

L'intérêt du codage de la carte réside dans le caractère difficilement destructible des informations.

## Description

Le domaine de l'invention est celui des cartes nominatives de type carte d'identité, carte bancaire, etc...

Plus précisément, l'invention concerne une carte à marquage magnétique renfermant des éléments absorbant sélectivment les hyperfréquences et le dispositif de lecture adapté à ce type de carte.

Actuellement le problème d'identification d'une carte nominative peut être résolu de différentes manières.

Il est ainsi possible d'utiliser un signe de reconnaissance lié au porteur de la carte et relativement simple à identifier ; ce signe pouvant être notamment une photo d'identité, une empreinte digitale etc... Néanmoins, cette méthode souffre de deux inconvénients majeurs : En effet il est facile de maquiller ou de modifier cette carte, alors qu'il est difficile de reconnaître électroniquement les signes distinctifs (photo ou empreinte) pour les traiter, par exemple, les comparer à une base de données.

Il est également possible d'utiliser un code d'identification, tel qu'un code-barres, un code magnétique ou un code sur carte à puce comme pour la carte bleue. La solution de la carte à puce s'avère relativement chère, alors que les autres solutions sont relativement faciles à contourner. Ainsi les codes magnétiques utilisés à l'heure actuelle résultent de l'inscription de domaines magnétiques orientés dans un sens ou dans l'autre. En présence de champ magnétique de telles informations peuvent facilement être détruites, ceci conduisant à l'élimination du mode d'authentification de la carte nominative.

Dans ce contexte, la présente invention propose une nouvelle carte magnétique dont le codage d'information devient difficilement destructible. Il s'agit d'un nouveau système de codage plus difficile à contrefaire que ceux de l'art antérieur et qui reste relativement peu coûteux à réaliser aussi bien pour la partie codage de la carte que pour le système de lecture associé à ce type de carte.

Ce codage d'informations est assuré sur la carte par la présence d'une piste sur laquelle sont disposés des éléments ferrimagnétiques résonant spontanément à différentes fréquences en hyperfréquence et donc absorbant les ondes hyperfréquences dans une certaine bande centrée sur leur fréquence de résonance. La lecture d'une telle carte est assurée par un dispositif capable d'émettre des ondes hyperfréquences de fréquences identiques à celles de résonance des matériaux ferrimagnétiques utilisés dans la carte magnétique et de mesurer l'amplitude des ondes hyperfréquences perturbées ou non par l'introduction de la carte dans ledit dispositif.

Plus précisément, la carte magnétique selon l'invention est caractérisée en ce qu'elle comporte une piste sur laquelle sont disposés des éléments comprenant chacun un matériau Mᵢ ferrimagnétique résonant à une fréquence foᵢ en hyperfréquence et donc absorbant les ondes hyperfréquences dans une bande Bᵢ centrée sur la fréquence de résonance foᵢ.

Typiquement, les éléments magnétiques peuvent être réalisés à partir de matériau composite renfermant de la poudre ferrimagnétique. La mise en oeuvre de tels composites est facilement exploitable industriellement. Et si le spectre magnétique du matériau composite est élargi par rapport à celui du matériau magnétique brut, sa gamme de fréquence de résonance reste inchangée par rapport à celle du matériau brut.

Les charges magnétiques utilisées dans une carte selon l'invention peuvent avantageusement être de type ferrites hexagonaux ou ferrites spinelles. Dans cette famille de matériaux ferrimagnétiques, la fréquence de résonance peut être sélectionnée par la composition chimique.

La carte magnétique selon l'invention peut être réalisée à partir de tout substrat souple ou dur de type plastique sur lequel est réalisée la piste magnétique matérialisée par l'alignement de pastilles de matériaux composites chargés en matériau ferrimagnétique Mᵢ.

L'invention a également pour objet un dispositif de lecture associé au type de carte selon l'invention. Plus précisément, il s'agit d'un dispositif de lecture, de carte magnétique comportant des éléments absorbant des ondes hyperfréquences, caractérisé en ce qu'il comporte au moins une cavité présentant une fente permettant l'introduction de la partie de la carte possédant les éléments absorbants, ladite cavité étant capable de confiner les ondes hyperfréquences et comprenant un système actif capable de générer des ondes hyperfréquences, un système résonant capable de filtrer une ou plusieurs ondes de fréquence précise et un système de mesure de l'amplitude des ondes hyperfréquences perturbées ou non par l'introduction de la carte magnétique.

Le système résonant assure la sélection d'ondes hyperfréquences à des fréquences déterminées, établies par la configuration même du système résonant. Il peut s'agir avantageusement d'un résonateur diélectrique inséré entre des éléments conducteurs, l'ensemble constituant un oscillateur. L'élément actif et le système de mesure peuvent être avantageusement des diodes.

Dans une autre variante de l'invention, un oscillateur peut constituer l'ensemble système actif-système résonant.

Ainsi, le dispositif de lecture de carte, selon l'invention peut comprendre plusieurs oscillateurs chaque oscillateur étant enfermé dans une cavité présentant une fente, permettant ainsi l'introduction et le défilement de la piste magnétique. La réponse de chaque oscillateur, soumis à l'émission d'ondes hyperfréquences par un élément actif, peut être détectée par une diode convenablement située dans la cavité. Et lorsque l'on fait défiler la piste magnétique de la carte, dans la fente du dispositif de lecture, convenablement positionnée par rapport à la structure résonante de l'oscillateur, la réponse d'un oscillateur donné n'est pas perturbée et donc le niveau de tension délivré par la diode correspondante est maximal, tant que la bande de fréquence du matériau magnétique Mᵢ qui se trouve en face de la cavité ne comprend pas la fréquence de l'oscillateur situé dans cette cavité.

Au contraire, lorsque la fréquence de l'oscillateur tombe dans la bande de fréquence du matériau magnétique Mᵢ considéré, qui perturbe ainsi la cavité considérée, le signal fourni par l'oscillateur est absorbé par ledit matériau Mᵢ et le niveau de tension délivré par la diode correspondante s'écroule.

Le dispositif de lecture selon l'invention peut être également capable de décoder différentes sortes de cartes dès lors qu'il comporte les résonateurs adaptés à l'ensemble des combinaisons de ferrites desdites cartes. C'est pourquoi, l'invention a aussi pour objet un dispositif de lecture de carte magnétique comprenant n élément Eᵢ comportant un matériau ferrimagnétique absorbant les ondes hyperfréquences dans une bande de fréquences Bᵢ, caractérisé en ce qu'il comporte m cavités capables de confiner les ondes hyperfréquences, chaque cavité comprenant un élément actif émettant des ondes hyperfréquences, un système Rⱼ capable de filtrer au moins une fréquence d'onde électromagnétique fⱼ, fⱼ appartenant à une bande de fréquence Bᵢ, un système de mesure de l'amplitude des ondes hyperfréquences, une fente de manière à permettre l'introduction et le défilement de la carte magnétique dans l'ensemble des m cavités et le nombre m étant supérieur ou égal au nombre n.

L'invention sera mieux comprise et d'autres avantages apparaîtront à la lecture de la description qui va suivre donnée à titre d'exemple non limitatif et des figures annexées parmi lesquelles :
- la figure 1 illustre les spectres de perméabilité magnétiques µ d'un exemple de matériau Mᵢ de type BaCoₓTiₓFe₁₂₋₂ₓO₁₉, en fonction de la fréquence ;
   * la figure 1a est relative à l'évolution de la partie réelle µ' de la perméabilité, en fonction de la fréquence, et ce pour différents taux de substitution x
   * la figure 1b est relative à l'évolution de la partie imaginaire µ" (représentative des pertes magnétiques) de la perméabilité, en fonction de la fréquence, et ce pour différents taux de substitution x
- la figure 2 illustre l'évolution des perméabilités µ' et µ" en fonction de la fréquence pour le ferrite BaFe_{8,8}Zn_{1,6}Ti_{1,6}O₁₉, en fonction de la fréquence ;
   * la figure 2a est relative au ferrite massif
   * la figure 2b est relative à un exemple de composite chargé avec 40 % volumique du ferrite massif précédent
- la figure 3 illustre un exemple de carte magnétique selon l'invention comprenant une piste destinée à la lecture de la carte, ladite piste comportant trois éléments à base de matériaux ferrimagnétiques ;
- la figure 4 illustre un exemple d'oscillateur selon l'invention ;
- la figure 5 illustre un exemple de cavité métallique, utilisée dans le dispositif de lecture de carte magnétique selon l'invention ;
- la figure 6 illustre un exemple de résonateur compris dans le dispositif de lecture et l'interaction entre ce résonateur et la piste magnétique comportant des éléments ferrimagnétiques ;
- la figure 7 illustre la puissance transmise pour un exemple de résonateur cylindrique R₁ en fonction de la fréquence ;
- la figure 8 illustre le spectre magnétique d'un ferrite M₁ utilisé dans un exemple de piste magnétique de carte à lire ;
- la figure 9 illustre la puissance transmise par le résonateur R₁ lorsque la carte équipée du ferrite M₁ est introduite dans la cavité comprenant le résonateur R₁ ;
- la figure 10 illustre la puissance transmise par un résonateur cylindrique R₂ en fonction de la fréquence ;
- la figure 11 illustre le spectre magnétique d'un ferrite M₂ utilisé dans un exemple de piste magnétique de la carte à lire, présentant une bande d'absorption contenant la bande de résonance du résonateur R₂ évoqué à la figure 10 ;
- la figure 12 illustre la puissance transmise par le résonateur R₂ lorsque la carte équipée du ferrite M₂ est introduite dans la cavité comprenant le résonateur R₂ ;
- la figure 13 illustre un exemple de dispositif de lecture selon l'invention utilisant un ensemble de trois cavités munies de résonateurs diélectriques ;
- la figure 14 illustrent les propriétés magnétiques de trois ferrites équipant une carte magnétique selon l'invention ;
   * la figure 14a fournit l'évolution de la partie réelle de la perméabilité magnétique µ' en fonction de la fréquence
   * la figure 14b fournit l'évolution de la partie imaginaire de la perméabilité magnétique µ" en fonction de la fréquence
- la figure 15 illustre les puissances lumineuses transmises par trois résonateurs, lors du défilement de trois ferrites en fonction de la fréquence, les trois résonateurs étant compris dans trois cavités Cav 1, Cav 2, CaV 3 ;
- la figure 16 illustre le signal détecté en fonction du temps par trois diodes situées respectivement dans les trois cavités Cav 1, Cav 2 et Cav 3 ;
- la figure 17 schématise un autre exemple de configuration de dispositif de lecture selon l'invention ne comprenant qu'une cavité.

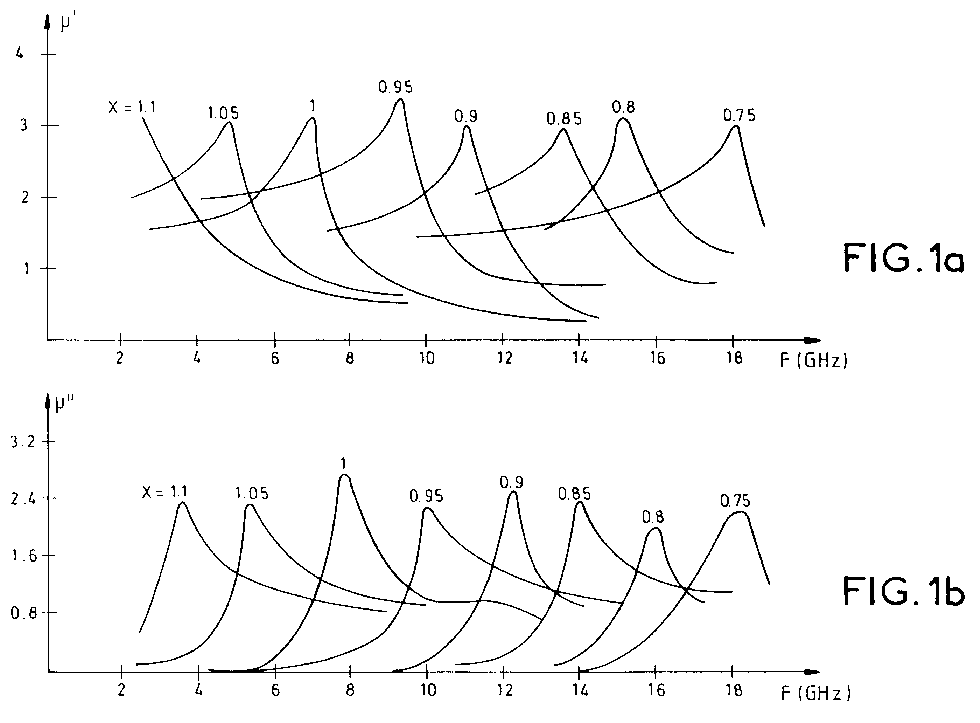

La carte magnétique selon l'invention comporte une piste sur laquelle sont disposés des éléments comprenant des matériaux ferrimagnétiques. Les matériaux peuvent être des ferrites hexagonaux dont la fréquence de résonance spontanée est ajustable en fonction de la composition chimique. C'est ainsi qu'avec des ferrites de type M, répondant à la formule BaFe₁₂O₁₉ on peut réaliser des matériaux résonant entre 2 et 47 GHz environ selon leur taux de substitutions simultanées de Co-Ti ou de Mn-Ti ou bien encore de Zn-Ti (M. PATE, J.C. MAGE, J.P. GANNE, Journées Nationales Microondes, Nice 1987, p 329). De même dans les ferrites de type spinelle substitués au cobalt, on peut réaliser des matériaux résonant entre quelques dizaines de mégahertz et plusieurs gigahertz (M. LABEYRIE, R. LEBOURGEOIS, M. PATE, International Conference on Ferrites 6, Tokyo 1992). La figure 1 illustre ce propos et montre qu'il est possible de régler la fréquence de résonance d'un ferrite de type BaCoₓTiₓFe₁₂₋₂ₓO₁₉ en fonction du taux de substitution x. Ainsi en déposant une série d'éléments comprenant des ferrites de composition variable il devient possible d'élaborer un système de codage de carte selon l'invention pouvant être décrypté par un dispositif de lecture adapté.

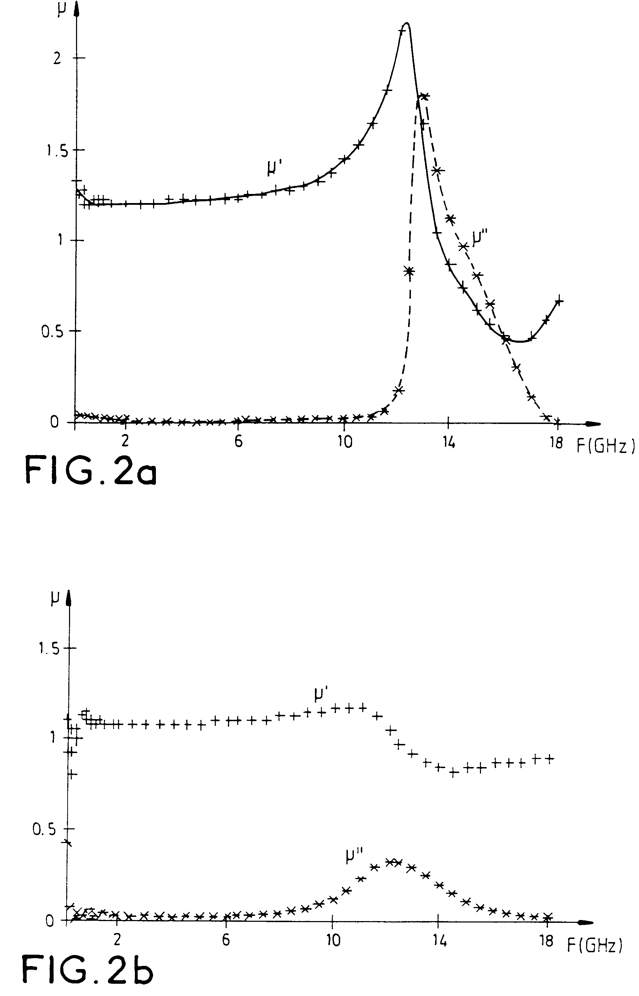

Pour réaliser une carte magnétique selon l'invention, on peut avantageusement avoir recours à des techniques classiques de dépôt de peinture ou de pâte de sérigraphie en utilisant des composites chargés en poudre de ferrite. La figure 2 montre l'évolution de la perméabilité d'un composé BaFe_{8,8}Zn_{1,6}Ti_{1,6}O₁₉ en fonction de la fréquence. La figure 2a est relative au ferrite brut alors que la figure 2b concerne un composite chargé à 40 % volumique en BaFe_{8,8}Zn_{1,6}Ti_{1,6}O₁₉. Le fait d'utiliser un composite chargé en ferrite ne conduit pas à un changement de gamme de fréquence de résonance comme en témoigne la comparaison des figures 2a et 2b, seul un élargissement desdites bandes est observé. C'est pourquoi la réalisation des cartes magnétiques selon l'invention peut être avantageusement effectuée avec des matériaux composites.

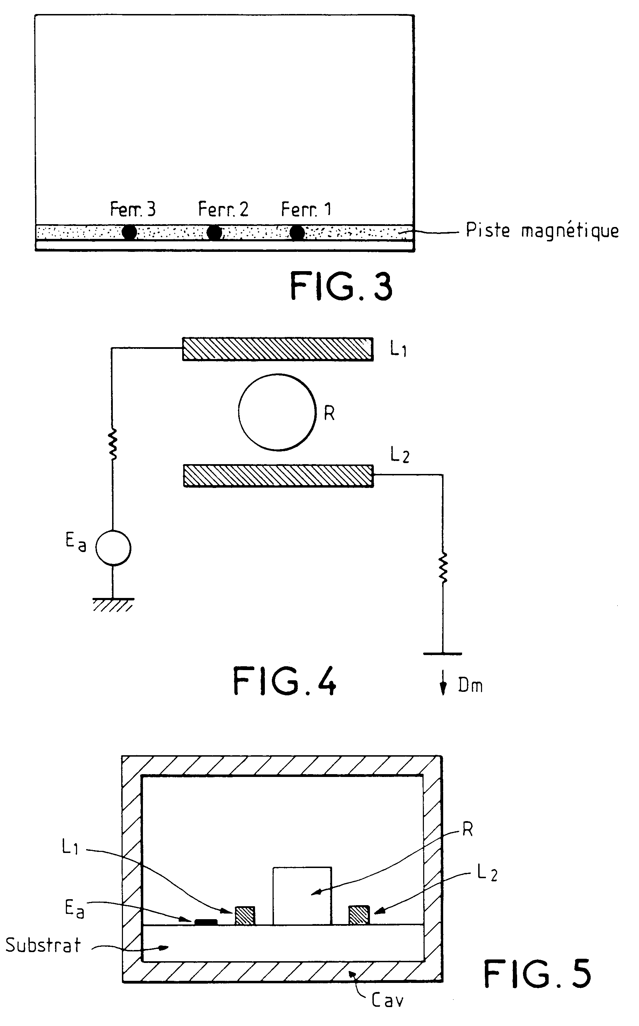

La figure 3 montre un exemple de carte magnétique selon l'invention. Il s'agit d'une carte classique dont la seule différence réside dans l'introduction d'une piste magnétique comprenant par exemple une série de trois éléments de matériaux composites M₁, M₂, M₃ chargés respectivement en ferrite 1, ferrite 2 et ferrite 3. Plus précisément, cette carte a été réalisée avec un premier ferrite de type BaCoₓTiₓFe₁₂₋₂ₓO₁₉ et x = 1, 2
- avec un second ferrite de type BaCoₓTiₓFe₁₂₋₂ₓO₁₉ et x = 0,95
- avec un troisième ferrite de type BaZnₓTiₓFe₁₂₋₂ₓO₁₉ et x = 1,6

les éléments sont réalisés avec des matériaux composites chargés à 50 %. Des pastilles de 4 mm de diamètre et 0,5 mm d'épaisseur, espacées d'environ 2 cm matérialisent la piste, l'ensemble étant élaboré sur un substrat classique plastifié de carte standard.

Le dispositif de lecture de ce type de carte, proposé dans l'invention peut de préférence être constitué d'un ensemble d'oscillateurs à résonateur diélectrique à différentes fréquences qui seront perturbés ou non, sélectivement, par les matériaux magnétiques de la piste de la carte. Les oscillateurs pouvant équiper le dispositif de lecture selon l'invention, sont illustrés par la figure 4. L'oscillateur comprend deux lignes conductrices L₁ et L₂ encore appelées microstrip, L₁ étant reliée à l'élément actif émetteur d'ondes hyperfréquences et L₂ étant reliée à un dispositif de lecture, diode par exemple ; les lignes L₁ et L₂ assurant le transport des ondes hyperfréquences. Il peut comprendre également un résonateur diélectrique R inséré entre les lignes L₁ et L₂, ce résonateur de part ses dimensions et sa permittivité diélectrique ε conduit à la sélection d'une fréquence fₒ stable, cette fréquence fₒ étant choisie dans la gamme de fréquences d'absorption d'un matériau ferrimagnétique M de la carte magnétique. L'ensemble élément actif, système résonant et système de lecture est introduit dans une cavité de type cavité métallique capable de confiner les ondes hyperfréquences, comme l'illustre la figure 5.

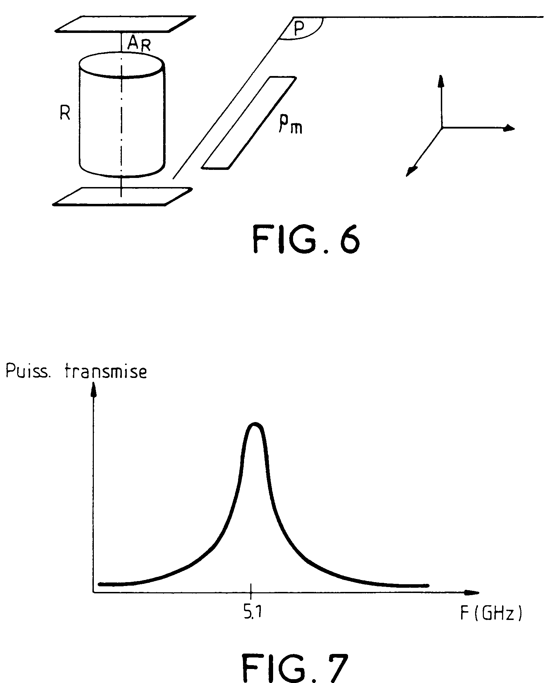

Les dimensions de la cavité, la fréquence propre du résonateur ainsi que le couplage entre le résonateur et la ligne conductrice conditionnent la fréquence de résonance de l'oscillateur selon un mode propre. Or pour observer ou non la perturbation dans cette cavité par la présence d'un élément ferrimagnétique de la piste, il faut choisir un mode pour lequel il existe un plan dans lequel E champ électrique est négligeable devant H champ magnétique. A cet effet, le mode TE₀₁₁ cylindrique du résonateur cylindrique, convient ainsi la perturbation due à la présence du matériau ferrimagnétique à proximité du résonateur est uniquement d'ordre magnétique. En disposant la piste magnétique dans un plan perpendiculaire à l'axe du résonateur comme l'illustre la figure 6, il y a effectivement une perturbation d'ordre magnétique capable d'être détectée par un système de mesure de l'amplitude des ondes hyperfréquences.

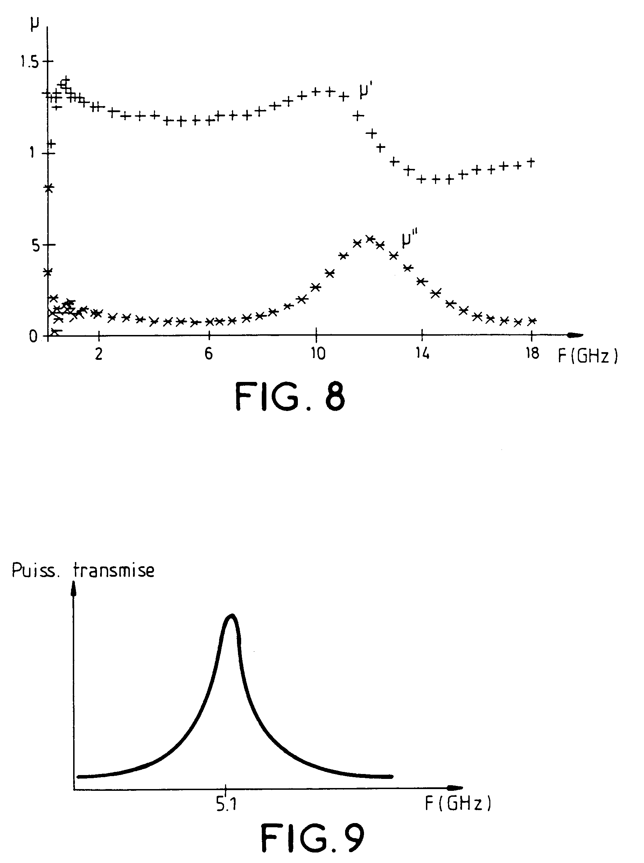

Pour illustrer le mode de fonctionnement du dispositif de lecture de la carte magnétique, selon l'invention, un premier résonateur cylindrique R₁ dont la puissance transmise est illustrée à la figure 7 a été mis à proximité d'une piste magnétique comprenant un composite chargé d'un ferrite M₁ dont les caractéristiques magnétiques sont illustrées à la figure 8. La figure 9 met en évidence qu'aucune perturbation n'est alors enregistrée au niveau de la puissance par le résonateur R₁.

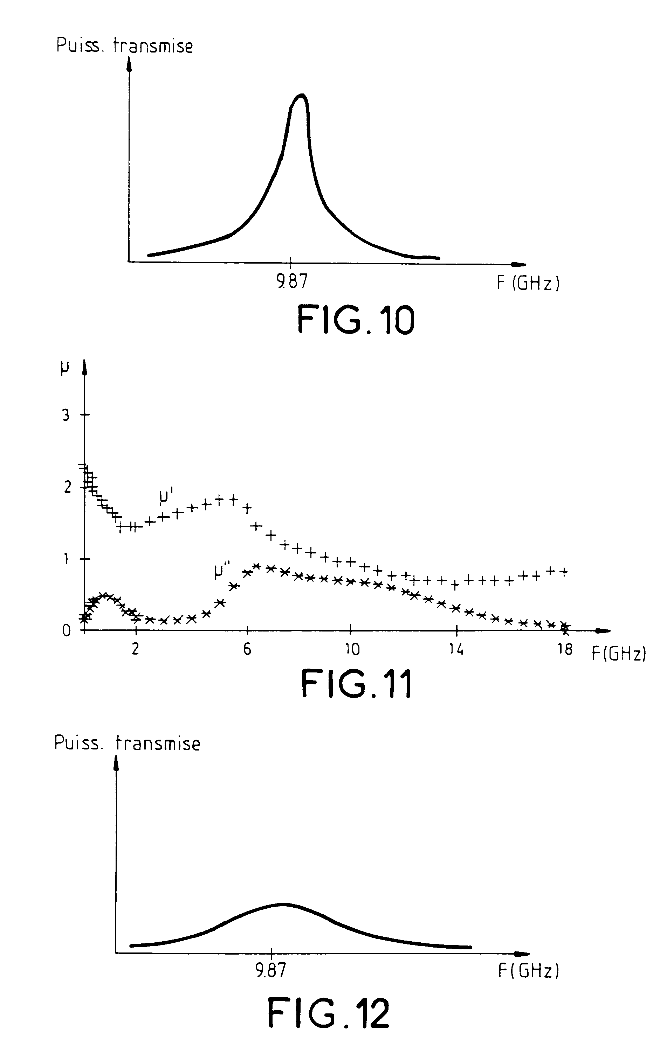

En utilisant par contre un résonateur cylindrique R₂ dont la puissance transmise est illustrée à la figure 10 pour lire une piste magnétique comprenant un composite chargé d'un ferrite M₂ dont les caractéristiques magnétiques sont illustrées à la figure 11, on obtient une perturbation très nette de la puissance transmise par R₂ lors de l'introduction de la carte dans une cavité contenant R₂, comme l'illustre la figure 12.

Selon ce fonctionnement il est possible d'équiper le dispositif de lecture, de plusieurs oscillateurs résonant à des fréquences différentes, avec des fentes d'introduction de la piste magnétique dans chaque cavité, disposées suivant une droite située dans un même plan électrique pour chaque résonateur, ceci conduisant au défilement de la piste magnétique munie de plusieurs éléments comprenant chacun un ferrite différent. On réalise ainsi un dispositif de lecture hyperfréquence très simple, de la piste magnétique hyperfréquence. Il suffit alors de passer la piste magnétique hyperfréquence le long de la fente pour lire un code résultant de la combinaison de différents ferrites, par perturbation successive des oscillateurs.

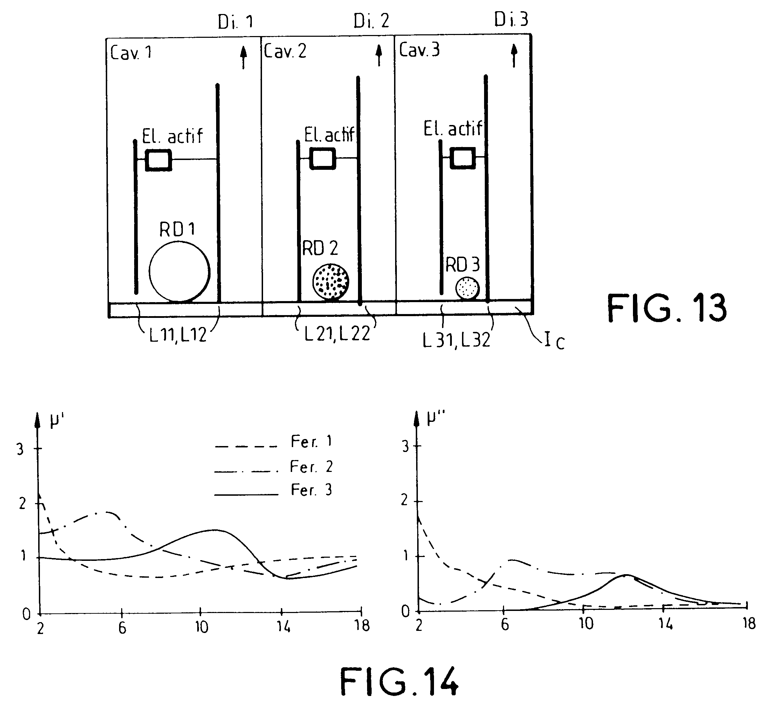

Ainsi la figure 13 illustre un exemple de dispositif de lecture selon l'invention équipé de trois cavités Cav 1, Cav 2, CaV 3, chacune étant munie d'un élément actif E₁ ou E₂ ou E₃ de lignes conductrices L₁₁, L₁₂ ou L₂₁, L₂₂ ou L₃₁, L₃₂, d'un résonateur diélectrique RD₁ ou RD₂ ou RD₃ et d'une diode de lecture Di₁ ou Di₂ ou Di₃, l'ensemble présentant une fente d'introduction de la carte I_{c} dans un plan perpendiculaire aux lignes conductrices, de manière à permettre le défilement des différents ferrites contenus dans la piste magnétique, devant successivement chaque résonateur.

Un exemple de réalisation du dispositif de lecture selon l'invention va être décrit dans le cas de la lecture d'une carte équipée de trois ferrites différents dont les propriétés magnétiques sont illustrées à la figure 14, ces trois ferrites étant de même composition que ceux définis dans l'exemple de la carte magnétique préalablement cité (M₁, M₂ et M₃).

Le dispositif de lecture comprend trois résonateurs RD₁, RD₂, RD₃ dont les caractéristiques sont les suivantes :

| | diamètre (mm) | épaisseur (mm) | ε | foᵢ(GHz) |
|---|---|---|---|---|
| RD₁ | 10 | 5 | 80 | 3,4 |
| RD₂ | 10,7 | 11,7 | 30 | 5,1 |
| RD₃ | 5 | 11,6 | 30 | 12,76 |

Le premier résonateur cylindrique est en (BaSm)TiO₃ et les deux autres sont des pérovskites BaZn_{1/3}Ta_{2/3}O₃.

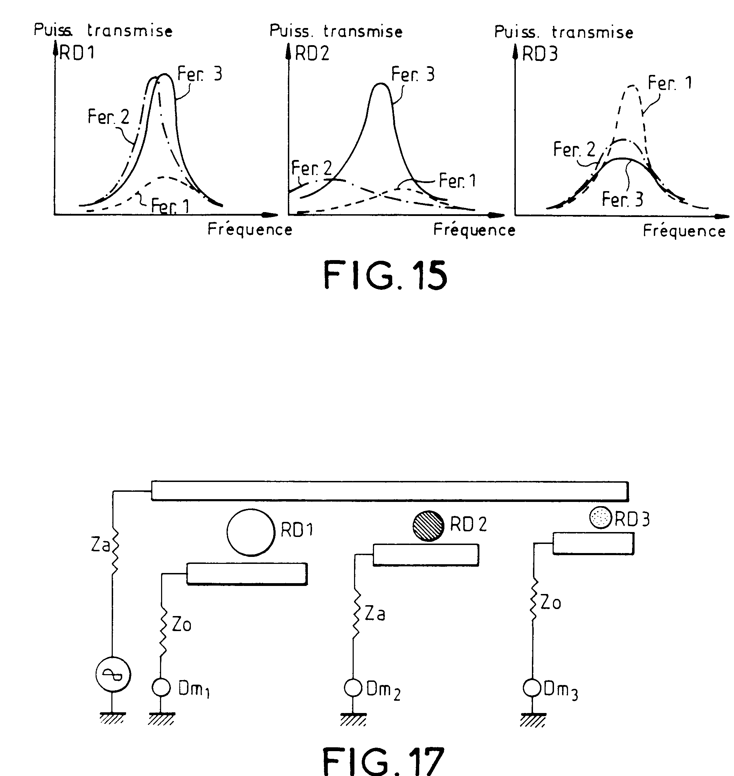

La figure 15 illustre les puissances transmises par les trois résonateurs (figure 15a pour RD₁) (figure 15b pour RD₂) (figure 15c pour RD₃) lors du défilement des trois éléments à base respectivement de M₁, M₂ et M₃ en fonction de la fréquence.

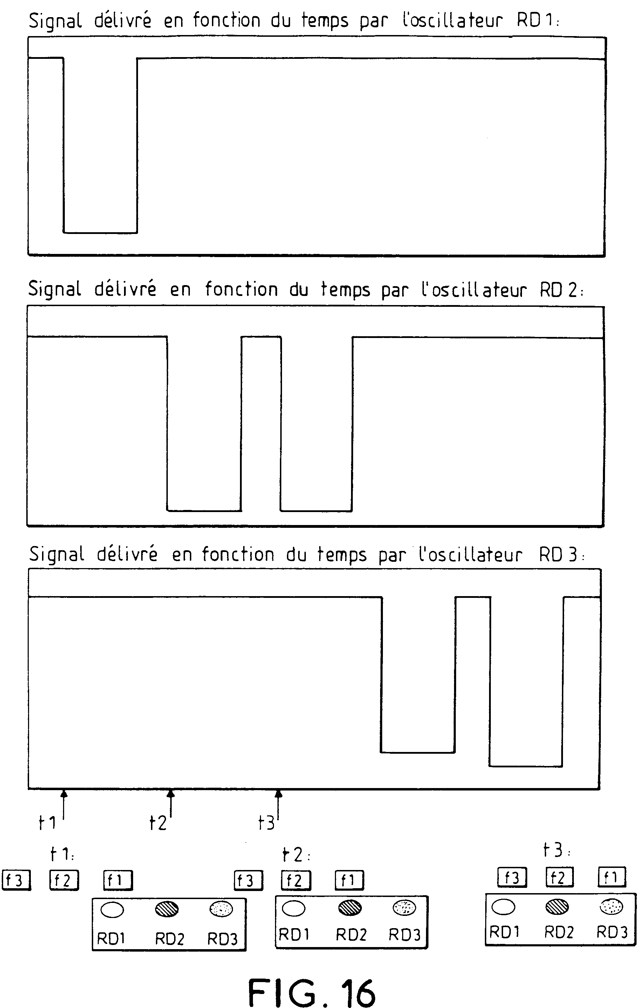

La figure 16 illustre quant à elle le signal détecté en fonction du temps pour chaque cavité Cav 1, Cav 2, Cav 3 et par les diodes D₁₁, D₁₂, D₁₃.

Cette figure met en évidence la possibilité de lire le codage d'informations d'une carte magnétique comprenant des éléments absorbant sélectivement les hyperfréquences, par un dispositif de lecture comportant un ensemble de résonateurs alimentés par un élément actif.

La figure 17 illustre à ce titre une autre configuration possible dans laquelle le dispositif de lecture est équipé d'une cavité comprenant une unique ligne L'1 connectée à un unique élément actif et trois lignes L'₂₁, L'₂₂, L'₂₃ connectées chacune à une diode de mesure Dm₁, Dm₂, Dm₃, la fente d'introduction de la carte étant alors dans le plan contenant l'ensemble desdites lignes.

## Revendications

1. Carte magnétique caractérisée en ce qu'elle comporte une piste sur laquelle sont disposés des éléments comprenant chacun un matériau Mᵢ ferrimagnétique résonant à une fréquence foᵢ en hyperfréquence et donc absorbant les ondes hyperfréquences dans une bande de fréquences Bᵢ centrée sur la fréquence de résonance foᵢ.

2. Carte magnétique selon la revendication 1, caractérisée en ce que les éléments de la piste sont constitués par des matériaux composites renfermant les matériaux ferrimagnétiques Mᵢ.

3. Carte magnétique selon l'une des revendications 1 ou 2, caractérisée en ce que les matériaux ferrimagnétiques sont des ferrites hexagonaux.

4. Carte magnétique selon l'une des revendications 1 ou 2, caractérisée en ce que les matériaux ferrimagnétiques sont des ferrites spinelles.

5. Carte magnétique selon l'une des revendications 1 à 4, caractérisée en ce que la piste est une bande de matériau plastique sur laquelle sont alignées des pastilles comprenant les matériaux Mᵢ.

6. Dispositif de lecture de carte magnétique comportant des éléments absorbant des ondes hyperfréquences, caractérisé en ce qu'il comporte au moins une cavité présentant une fente permettant l'introduction de la partie de la carte possédant les éléments absorbant, ladite cavité étant capable de confiner les ondes hyperfréquences et comprenant un système actif capable de générer des ondes hyperfréquences, un système résonant capable de filtrer une ou plusieurs ondes de fréquence précise et un système de mesure de l'amplitude des ondes hyperfréquences perturbées ou non par l'introduction de la carte magnétique.

7. Dispositif de lecture de carte magnétique selon la revendication 6, caractérisé en ce que le système résonant est inséré entre deux éléments conducteurs, le premier étant relié au système actif, le deuxième étant relié au système de mesure de l'amplitude des ondes hyperfréquences.

8. Dispositif de lecture de carte magnétique selon l'une des revendications 6 ou 7, caractérisé en ce que l'élément actif est une diode.

9. Dispositif de lecture de carte magnétique selon la revendication 6, caractérisé en ce qu'un oscillateur constitue l'ensemble système actif-système résonant.

10. Dispositif de lecture de carte magnétique selon l'une des revendications 6 à 9, caractérisé en ce que le système de mesure de l'amplitude des ondes hyperfréquences est une diode.

11. Dispositif de lecture de carte magnétique comprenant n éléments Eᵢ comportant un matériau Mᵢ ferrimagnétique absorbant les ondes hyperfréquences dans une bande de fréquences Bᵢ, caractérisé en ce qu'il comporte m cavités capables de confiner les ondes hyperfréquences, chaque cavité comprenant un élément actif émettant des ondes hyperfréquences, un système résonant Rⱼ capable de filtrer une fréquence d'onde électromagnétique fⱼ, fⱼ appartenant à au moins une bande de fréquence Bᵢ, un système de mesure de l'amplitude des ondes hyperfréquences, une fente de manière à permettre l'introduction et le défilement de la carte magnétique dans l'ensemble des m cavités et le nombre m étant supérieur ou égal au nombre n.
